# EUROPÄISCHE PATENTSCHRIFT

(11) **EP 3 679 555 B1**
(45) Veröffentlichungstag und Bekanntmachung des Hinweises auf die Patenterteilung: **08.12.2021**
(21) Anmeldenummer: 18766143.4
(22) Anmeldetag: 24.08.2018
(51) Int. Cl.: G08B 13/19

(54) **BEWEGUNGSSENSORVORRICHTUNG, VERFAHREN ZUM BETREIBEN EINER BEWEGUNGSSENSORVORRICHTUNG UND BELEUCHTUNGSSYSTEM**
MOTION SENSOR DEVICE, METHOD FOR OPERATING A MOTION SENSOR DEVICE AND LIGHTING SYSTEM
PROCÉDÉ POUR FAIRE FONCTIONNER UN DISPOSITIF DE DÉTECTION DE MOUVEMENT ET SYSTÈME D'ÉCLAIRAGE

(30) Priorität: 06.09.2017 DE 102017215686
(43) Veröffentlichungstag der Anmeldung: 15.07.2020
(73) Patentinhaber: Tridonic GmbH & Co. KG, 6851 Dornbirn (AT); Zumtobel Lighting GmbH, 6850 Dornbirn (AT)
(72) Erfinder: KÜNZLI, Markus, 8750 Glarus (CH); KISTLER, Roger, 8755 Ennenda (CH); JELICIC, Vana, 6850 Dornbirn (AT)
(74) Vertreter: Banzer, Hans-Jörg
(86) Internationale Anmeldenummer: PCT/EP2018/072858
(87) Internationale Veröffentlichungsnummer: WO 2019/048257

(56) Entgegenhaltungen:
- DE-A1-102006 057 973
- US-A1- 2005 236 572
- US-A1- 2009 302 220

## Beschreibung

### GEBIET DER ERFINDUNG

Die vorliegende Erfindung betrifft eine Bewegungssensorvorrichtung, ein Verfahren zum Betreiben derselben, sowie ein Beleuchtungssystem mit der Bewegungssensorvorrichtung.

### HINTERGRUND DER ERFINDUNG

PIR-Sensoren (engl. Pyroelectric / Passive InfraRed Sensors) dienen zur Detektion von Temperaturänderungen basierend auf Pyroelektrizität, einer Eigenschaft einiger piezoelektrischer Kristalle, eine Temperaturänderung in elektrische Polarisation bzw. Ladungstrennung umzusetzen.

Pyroelektrische Kristalle reagieren auf Temperaturänderungen, welche sich bei geeigneter Absorptionsbeschichtung des Kristalls aus einer einfallenden Strahlung gewünschter Wellenlänge, insbesondere Infrarotstrahlung, ergeben können.

PIR-Sensoren für Bewegungsmelder weisen üblicherweise mehrere (zwei oder vier) benachbarte Sensorelemente auf, welche zueinander gegenpolig verschaltet sind. Eine Bestrahlung benachbarter Sensorelemente ruft infolgedessen positive bzw. negative Spannungspulse hervor. Bei gleichzeitiger Bestrahlung heben sich diese auf, bei sequentieller Bestrahlung bilden sich gut detektierbare Spannungsflanken.

Ein Erfassungsbereich von Bewegungsmeldern lässt sich durch eine dem PIR-Sensor vorgeschaltete Linsenanordnung mit mehreren Linsen räumlich in mehrere Erfassungszonen auffächern. Jede Linse der Linsenanordnung lenkt die Wärmestrahlung aus einer Erfassungszone auf zumindest eines der mehreren Sensorelemente.

Die Bildung gut detektierbarer Spannungsflanken wird unterstützt, indem Erfassungszonen so zueinander räumlich beabstandet werden, dass ein gegenüber dem Hintergrund wärmeres Objekt beim Durchgang durch den Erfassungsbereich möglichst immer nur in einer Erfassungszone bzw. durch das dieser zugeordnete Sensorelement erfasst wird.

Die mehreren benachbarten Sensorelemente bekannter PIR-Sensoren ermöglichen eine Detektion, dass im Erfassungsbereich eine Bewegung präsent ist, nicht jedoch in welche Richtung diese Bewegung erfolgt.

Aus der Druckschrift US 2009/0302220 A1 ist eine Bewegungssensorvorrichtung gemäß dem Oberbegriff des Anspruches 1 bekannt.

Zudem offenbart die Druckschrift US 2005/0236572 A1 einen PIR-Bewegungssensor mit zwei Detektionselementen, wobei abwechselnde räumliche Volumina von jedem Detektionselement überwacht werden. Die Detektionselemente sind derart ausgestaltet, dass ein sich bewegendes Objekt bewirkt, dass die Detektionselemente unterschiedliche Frequenzen ausgeben, während bei einem sich nicht bewegenden Objekt von beiden Detektionselementen dieselbe Frequenz erzeugt wird.

### ZUSAMMENFASSUNG DER ERFINDUNG

Es besteht ein Bedarf an Bewegungssensorvorrichtungen, Verfahren zum Betreiben derselben und Beleuchtungssystemen mit den Bewegungssensorvorrichtungen, welche eine Detektion der Richtung einer erfassten Bewegung ermöglichen.

Diese Aufgabe wird erfindungsgemäß durch eine Bewegungssensorvorrichtung mit den Merkmalen des Patentanspruchs 1, ein Verfahren zum Betreiben einer Bewegungssensorvorrichtung mit den Merkmalen des Patentanspruchs 11 sowie durch ein Beleuchtungssystem mit der Bewegungssensorvorrichtung mit den Merkmalen des Patentanspruchs 10 gelöst. Die abhängigen Ansprüche definieren bevorzugte und vorteilhafte Ausführungsformen der Erfindung.

Eine Bewegungssensorvorrichtung gemäß der Erfindung umfasst einen PIR-Sensor mit mehreren zueinander benachbart angeordneten Sensorelementen, deren sensoraktive Oberflächen einen Detektionsbereich des PIR-Sensors bilden, und eine Optik, welche dazu eingerichtet ist, einen Erfassungszonen umfassenden Erfassungsbereich der Bewegungssensorvorrichtung auf den Detektionsbereich des PIR-Sensors abzubilden. Dabei weisen die Erfassungszonen in dem Erfassungsbereich der Bewegungssensorvorrichtung eine räumlich-periodische Anordnung mit richtungsabhängiger Periodizität auf.

Vorteilhafterweise ermöglichen solche Bewegungssensorvorrichtungen eine Erkennung einer Richtung einer detektierten Bewegung, welche auf einer Auswertung der richtungsabhängigen Periodizität der räumlich-periodischen Anordnung der Erfassungszonen in dem Erfassungsbereich der Bewegungssensorvorrichtung beruht. Ferner sind in solchen Bewegungssensorvorrichtungen übliche PIR-Sensoren einsetzbar.

Unter "benachbart" im Sinne dieser Anmeldung wird eine sich seitlich gegenüberliegende Anordnung mit einer räumlichen Beabstandung verstanden, wie sie insbesondere zwischen Sensorelementen üblicher PIR-Sensoren vorgesehen ist.

Unter einer "sensoraktiven Oberfläche" im Sinne dieser Anmeldung wird verstanden, dass eine solche Oberfläche für eine Strahlung, die zu einem Messsignal des PIR-Sensors beiträgt, durchlässig ist.

Unter einer "Optik" im Sinne dieser Anmeldung wird eine dem Erfassungsbereich der Bewegungssensorvorrichtung zugewandte Linsenanordnung mit mehreren Linsen, oder eine Spiegelanordnung mit mehreren Spiegeln verstanden. Eine solche Optik kann beispielsweise aus thermoplastischem Kunststoff hergestellt sein.

Unter einer "räumlich-periodischen Anordnung" im Sinne dieser Anmeldung wird eine wiederholte, insbesondere zwei- oder mehrfache Anordnung in zumindest einer Raumrichtung verstanden.

Unter einer "richtungsabhängigen Periodizität" im Sinne dieser Anmeldung wird eine räumlich-periodische Anordnung in zwei verschiedene Raumrichtungen mit unterschiedlich häufiger Wiederholung bezüglich der verschiedenen Raumrichtungen verstanden.

Gemäß einem Ausführungsbeispiel umfasst die Bewegungssensorvorrichtung ferner eine Signalverarbeitungseinheit, welche dazu eingerichtet ist, die richtungsabhängige Periodizität der Erfassungszonen in dem Erfassungsbereich der Bewegungssensorvorrichtung zu bestimmen.

Vorteilhafterweise ermöglicht eine solche Signalverarbeitungseinheit eine Erkennung einer Richtung einer detektierten Bewegung und/oder eines Aufenthaltsorts von sich im Erfassungsbereich der Bewegungssensorvorrichtung bewegenden Objekten.

Unter einer Signalverarbeitungseinheit im Sinne dieser Anmeldung wird eine Einheit verstanden, welche dazu eingerichtet ist, Eingangssignale zu empfangen, zu analysieren und in Ausgangssignale mit einem interessierenden Informationsgehalt umzusetzen. Insbesondere ist die Signalverarbeitungseinheit dazu eingerichtet, Messsignale des PIR-Sensors zu empfangen, zu analysieren und in Ausgangssignale umzusetzen, welche eine oder mehrere Bewegungen, Bewegungsrichtungen und/oder einen oder mehrere Aufenthaltsorte von sich im Erfassungsbereich der Bewegungssensorvorrichtung bewegenden Objekten angeben.

Gemäß einem Ausführungsbeispiel ist die Signalverarbeitungseinheit ferner dazu eingerichtet, zwischen Paaren zueinander benachbart angeordneter Sensorelemente des PIR-Sensors Differenzsignale von Ausgangssignalen der Sensorelemente zu bilden, und/oder Frequenzkomponenten in den Differenzsignalen oder den Ausgangssignalen zu bestimmen.

Vorteilhafterweise ermöglicht eine solche Signalverarbeitungseinheit eine Erkennung von Frequenzkomponenten, beispielsweise mittels Spektralanalyse, in jenen Differenz- bzw. Ausgangssignalen, welche übliche PIR-Sensoren liefern.

Die Erfassungszonen weisen erfindungsgemäß eine räumlich periodische Anordnung mit richtungsabhängiger Periodizität gemäß erster und zweiter zueinander orthogonaler Richtungen in dem Erfassungsbereich der Bewegungssensorvorrichtung auf.

Vorteilhafterweise spannt eine solche räumlich-periodische Anordnung mit richtungsabhängiger Periodizität gemäß erster und zweiter zueinander orthogonaler Richtungen ein kartesisches Koordinatensystem in einer von dem Erfassungsbereich der Bewegungssensorvorrichtung erfassten Geh- oder Bewegungsfläche auf. Auf Grundlage dieses Koordinatensystems lassen sich sämtliche Bewegungsrichtungen in einer Ebene der Geh- oder Bewegungsfläche beschreiben.

Erfindungsgemäß ist die Optik dazu eingerichtet, Gruppen der Erfassungszonen durch eine jeweilige Abbildung in den Detektionsbereich des PIR-Sensors abzubilden. Vorteilhafterweise begrenzt eine gruppenweise Abbildung der Erfassungszonen in den Detektionsbereich des PIR-Sensors eine Zahl der Linsen, welche die Optik umfassen muss, da je Abbildung bzw. Gruppe eine Linse erforderlich ist.

Gemäß einem Ausführungsbeispiel entspricht eine Zahl der Erfassungszonen einer jeweiligen der Gruppen der Erfassungszonen einer Zahl der Sensorelemente des PIR-Sensors.

Gemäß einem Ausführungsbeispiel entspricht eine Anordnung der Erfassungszonen der jeweiligen Gruppe der Erfassungszonen der zueinander benachbarten Anordnung der Sensorelemente des PIR-Sensors.

Vorteilhafterweise sind jeweilige Abbildungen solcher Gruppen von Erfassungszonen leicht in entsprechende Linsen für die Optik umzusetzen.

Die Optik ist erfindungsgemäß dazu eingerichtet, mehrere der Gruppen der Erfassungszonen in dem Detektionsbereich des PIR-Sensors zu überlagern.

Vorteilhafterweise ermöglicht eine solche Optik mit mehreren Linsen, wobei je eine der mehreren Linsen eine Abbildung einer der mehreren Gruppen der Erfassungszonen bewirkt, eine Erfassung einer Zahl von Erfassungszonen, welche ein ganzzahliges Vielfaches der Zahl der Sensorelemente des PIR-Sensors ist.

Gemäß einem Ausführungsbeispiel ist die Optik dazu eingerichtet, die jeweilige Gruppe der Erfassungszonen zur Abbildung in den Detektionsbereich des PIR-Sensors in einer ersten Dimension zu skalieren, welche sich in dem Erfassungsbereich der Bewegungssensorvorrichtung in der ersten Richtung erstreckt.

Gemäß einem Ausführungsbeispiel ist die Optik dazu eingerichtet, die jeweilige Gruppe der Erfassungszonen zur Abbildung in den Detektionsbereich des PIR-Sensors in einer zu der ersten Dimension orthogonalen zweiten Dimension zu skalieren, welche sich in dem Erfassungsbereich der Bewegungssensorvorrichtung in der zweiten Richtung erstreckt.

Vorteilhafterweise ermöglicht eine solche Optik eine Variation einer räumlichen Periodizität - oder mit anderen Worten, einer Ortsfrequenz - der räumlich-periodischen Anordnung der Erfassungszonen in dem Erfassungsbereich der Bewegungssensorvorrichtung in der ersten und/oder in der dazu orthogonalen zweiten Richtung in der von dem Erfassungsbereich der Bewegungssensorvorrichtung erfassten Geh- oder Bewegungsfläche.

Unter einer "Ortsfrequenz" im Sinne dieser Anmeldung wird eine Periodenzahl je Längeneinheit in einer Raumrichtung verstanden.

Gemäß einem Ausführungsbeispiel ist die Optik dazu eingerichtet, sämtliche der Erfassungszonen des Erfassungsbereichs des PIR-Sensors vollständig in den Detektionsbereich des PIR-Sensors abzubilden.

Vorteilhafterweise maximiert eine solche Optik eine Empfindlichkeit der Bewegungssensorvorrichtung bezüglich zu erfassender Objekte und Bewegungen, da eine in den Erfassungszonen abgegebene detektierbare Strahlung im höchstmöglichen Maß auf die Sensorelemente des PIR-Sensors abgebildet wird.

Gemäß einem Ausführungsbeispiel umfasst der PIR-Sensor zwei oder vier der zueinander benachbart angeordneten Sensorelemente.

Vorteilhafterweise sind daher übliche PIR-Sensoren mit entsprechender Zahl und Anordnung der Sensorelemente in der Bewegungssensorvorrichtung einsetzbar.

Ein erfindungsgemäßes Beleuchtungssystem umfasst eine Bewegungssensorvorrichtung gemäß der Erfindung.

Vorteilhafterweise ermöglicht ein solches Beleuchtungssystem eine Erkennung von Bewegungen, Bewegungsrichtungen und/oder Aufenthaltsorten von Objekten, welche sich in Erfassungsbereichen von Bewegungssensorvorrichtungen bewegen, für Beleuchtungsanwendungen und darüber hinaus, beispielsweise für ein den Menschen bei seinen Tätigkeiten unmerklich unterstützendes Internet der Dinge (loT).

Gemäß einem Ausführungsbeispiel wird das Verfahren mit der Bewegungssensorvorrichtung gemäß Ausführungsbeispielen durchgeführt.

Demzufolge sind die im Zusammenhang mit der Bewegungssensorvorrichtung genannten Merkmale in dem Verfahren analog nutzbar. Ferner ergeben sich für das Verfahren analoge Effekte und Vorteile.

### KURZE BESCHREIBUNG DER FIGUREN

Die Erfindung wird nachfolgend anhand bevorzugter Ausführungsformen und unter Bezugnahme auf die Zeichnungen kurz erläutert, wobei gleiche Bezugszeichen gleiche oder ähnliche Elemente bezeichnen.
Fig. 1 - 3 zeigen schematisch Draufsichten auf Gruppen von Erfassungszonen einer Bewegungssensorvorrichtung gemäß Ausführungsbeispielen.
Fig. 4 zeigt schematisch eine Draufsicht auf mehrere in einem Erfassungsbereich einer Bewegungssensorvorrichtung gemäß Ausführungsbeispielen überlagerte Gruppen von Erfassungszonen.
Fig. 5 zeigt schematisch eine Perspektivansicht einer Bewegungssensorvorrichtung gemäß Ausführungsbeispielen.
Fig. 6 zeigt schematisch ein Blockschaltbild einer Bewegungssensorvorrichtung gemäß Ausführungsbeispielen.
Fig. 7 zeigt schematisch ein Blockschaltbild eines Beleuchtungssystems gemäß einem Ausführungsbeispiel.
Fig. 8 zeigt Verfahrensschritte eines Verfahrens zum Betreiben einer Bewegungssensorvorrichtung gemäß Ausführungsbeispielen.

### DETAILLIERTE BESCHREIBUNG VON AUSFÜHRUNGSBEISPIELEN

Die Erfindung wird nachfolgend anhand bevorzugter Ausführungsformen und unter Bezugnahme auf die Zeichnungen näher erläutert.

Eine Beschreibung von Ausführungsbeispielen in spezifischen Anwendungsfeldern bedeutet keine Einschränkung auf diese Anwendungsfelder.

Elemente schematischer Darstellungen sind nicht notwendigerweise maßstabsgetreu wiedergegeben, sondern vielmehr derart, dass ihre Funktion und ihr Zweck dem Fachmann verständlich werden.

Soweit nicht ausdrücklich anders angegeben sind die Merkmale der verschiedenen Ausführungsformen miteinander kombinierbar.

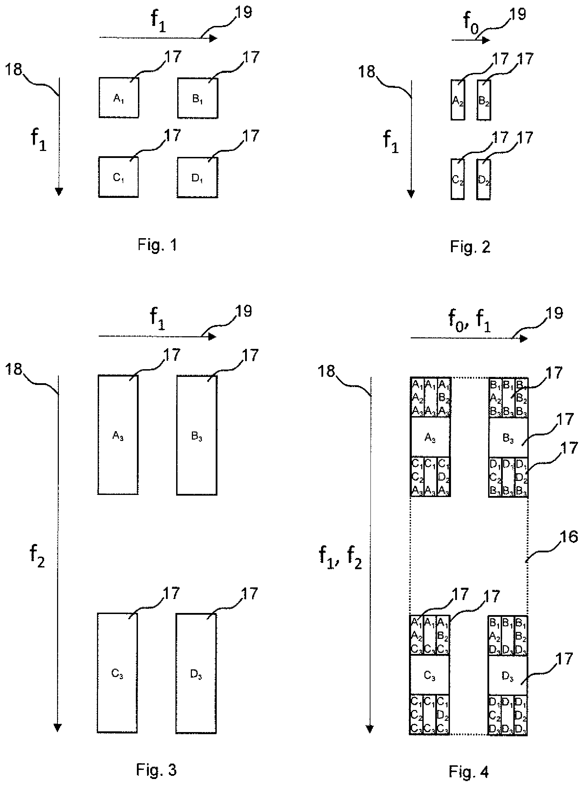

Fig. 1 ― 3 zeigen schematisch Draufsichten auf Gruppen von Erfassungszonen 17 einer Bewegungssensorvorrichtung 10 gemäß Ausführungsbeispielen.

In diesen Figuren entspricht eine Zahl und eine Anordnung der Erfassungszonen 17 einer jeweiligen der Gruppen der Erfassungszonen 17 einer Zahl und einer Anordnung der Sensorelemente 12 des PIR-Sensors 11.

Der PIR-Sensor 11 der - nicht dargestellten - Bewegungssensorvorrichtung 10 umfasst vier zueinander benachbart angeordnete Sensorelemente 12, welche in dem PIR-Sensor 11 den Erfassungszonen 17 der in Fig. 1 dargestellen Gruppe der Erfassungszonen 17 entsprechend zueinander angeordnet sind.

Die Optik 15 der Bewegungssensorvorrichtung 10 ist dazu eingerichtet, die jeweilige in Fig. 1 - 3 dargestellte Gruppe der Erfassungszonen 17 zur Abbildung in den Detektionsbereich 13 des PIR-Sensors 11 in einer ersten Dimension und/oder in einer zu der ersten Dimension orthogonalen zweiten Dimension zu skalieren, welche sich in dem Erfassungsbereich 16 der Bewegungssensorvorrichtung 10 in der ersten Richtung 18 und/oder in der zweiten Richtung 19 erstrecken.

Dementsprechend ergeben sich bei räumlich periodischer Anordnung der jeweiligen in Fig. 1 - 3 dargestellten Gruppe der Erfassungszonen 17 verschiedene Periodizitäten bzw. Ortsfrequenzen in den ersten und zweiten Richtungen 18, 19.

Fig. 1 zeigt keinerlei Skalierung, während Fig. 2 eine Stauchung in der zweiten Dimension bzw. zweiten Richtung 19 und Fig. 3 eine Streckung in der ersten Dimension bzw. ersten Richtung 18 darstellen. Daher ergeben sich in den ersten und zweiten Richtungen 18, 19 in Fig. 1 Ortsfrequenzen mit Frequenzkomponenten f₁ und f₁, in Fig. 2 Ortsfrequenzen mit Frequenzkomponenten f₁ und fo, sowie in Fig. 3 Ortsfrequenzen mit Frequenzkomponenten f₂ und f₁.

Den in Fig. 1 - 3 gezeigten Gruppen von Erfassungszonen 17 sind Buchstaben A - D sowie numerische Indizes zugeordnet. Dies dient der besseren Verständlichkeit der in der folgenden Fig. 4 dargestellten Überlagerung dieser Gruppen von Erfassungszonen 17. Die Buchstaben bezeichnen ein jeweiliges Sensorelement A - D des PIR-Sensors 11, auf welches eine Abbildung der solchermaßen gekennzeichneten Erfassungszone 17 durch die Optik 15 erfolgt, während die numerischen Indizes eine jeweilige Gruppe von Erfassungszonen 17 benennt. Beispielsweise werden die in Fig. 2 mit A₂ ― D₂ bezeichneten Erfassungszonen 17 gemeinsam als Gruppe 2 auf den PIR-Sensor 11 abgebildet, wobei die mit A₂ ― D₂ bezeichneten Erfassungszonen 17 auf die Sensorelemente A - D des PIR-Sensors 11 treffen.

Fig. 4 zeigt schematisch eine Draufsicht auf mehrere in einem Erfassungsbereich 16 einer Bewegungssensorvorrichtung 10 gemäß Ausführungsbeispielen überlagerte Gruppen von Erfassungszonen 17.

Aus Gründen der Übersichtlichkeit wurde in Fig. 4 lediglich eine kleine Auswahl von Erfassungszonen 17 mit dem zugehörigen Bezugszeichen gekennzeichnet.

In Fig. 4 wurden die in den Fig. 1 - 3 eingeführten Gruppen von Erfassungszonen 17 derart in dem Erfassungsbereich 16 überlagert, dass die überlagerten Erfassungszonen 17 eine räumlich periodische Anordnung mit richtungsabhängiger Periodizität gemäß den ersten und zweiten zueinander orthogonalen Richtungen 18, 19 in dem Erfassungsbereich 16 der Bewegungssensorvorrichtung 10 aufweisen.

Im Einzelnen umfasst der in Fig. 4 dargestellte Erfassungsbereich 16 einmal die Gruppe 3 von Erfassungszonen 17 aus Fig. 3, und zweimal die Gruppe 1 von Erfassungszonen 17 aus Fig. 1, und zwar ein erstes Mal den oberen beiden Erfassungszonen A₃, B₃, und ein zweites Mal den unteren beiden Erfassungszonen C₃, D₃ überlagert. Ferner umfasst der Erfassungsbereich 16 aus Fig. 4 viermal die Gruppe 2 von Erfassungszonen 17 aus Fig. 2, nämlich je einmal den Erfassungszonen A₃, B₃, C₃, und D₃ überlagert.

Mit fortdauerndem Bezug zu Fig. 4 weisen die Erfassungszonen 17 in dem Erfassungsbereich 16 der Bewegungssensorvorrichtung 10 eine räumlich periodische Anordnung mit richtungsabhängiger Periodizität auf, welche sich aus den richtungsabhängigen Periodizitäten der überlagerten Gruppen von Erfassungszonen 17 zusammensetzt.

Bei näherer Betrachtung ergeben sich Ortsfrequenzen f₁ und f₂ in die erste Richtung 18 und Ortsfrequenzen f₀ und f₁ in die zweite Richtung 19 in dem in der Ebene dieser beiden Richtungen 18, 19 aufgespannten Erfassungsbereich 16 der Bewegungssensorvorrichtung 10.

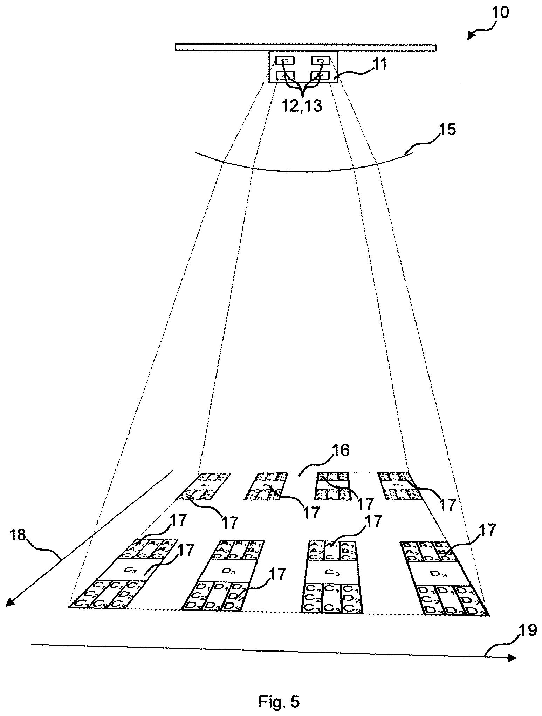

Fig. 5 zeigt schematisch eine Perspektivansicht einer Bewegungssensorvorrichtung 10 gemäß Ausführungsbeispielen.

Auch in Fig. 5 wurde aus Gründen der Übersichtlichkeit lediglich eine kleine Auswahl von Erfassungszonen 17 mit dem zugehörigen Bezugszeichen gekennzeichnet.

Die in Fig. 5 dargestellte Bewegungssensorvorrichtung 10 umfasst einen beispielhaft unterhalb einer Raumdecke angebrachten PIR-Sensor 11 mit mehreren zueinander benachbart angeordneten Sensorelementen 12, welche zur Veranschaulichung mit den Buchstaben A - D bezeichnet sind und deren sensoraktive Oberflächen einen Detektionsbereich 13 des PIR-Sensors 11 bilden, und eine Optik 15, welche dazu eingerichtet ist, einen Erfassungszonen 17 umfassenden Erfassungsbereich 16 der Bewegungssensorvorrichtung 10 auf den Detektionsbereich 13 des PIR-Sensors 11 abzubilden.

Die Erfassungszonen 17 des Erfassungsbereichs 16 der Bewegungssensorvorrichtung 10 weisen eine räumlich periodische Anordnung mit richtungsabhängiger Periodizität auf, welche in diesem Ausführungsbeispiel der in Fig. 4 abgebildeten Überlagerung mehrerer Gruppen von Erfassungszonen 17 entspricht.

Wie Fig. 5 ferner zeigt weisen die Erfassungszonen 17 insbesondere eine räumlich periodische Anordnung mit richtungsabhängiger Periodizität gemäß erster und zweiter zueinander orthogonaler Richtungen 18, 19 in dem Erfassungsbereich 16 der Bewegungssensorvorrichtung 10 auf.

Die Optik 15 der Bewegungssensorvorrichtung 10 ist dazu eingerichtet, Gruppen der Erfassungszonen 17 durch eine jeweilige Abbildung in den Detektionsbereich 13 des PIR-Sensors 11 abzubilden, und dabei die mehreren Gruppen der Erfassungszonen 17 in dem Detektionsbereich 13 des PIR-Sensors 11 zu überlagern. Insbesondere wird eine jede der in den Fig. 1 - 3 abgebildeten Gruppen i von Erfassungszonen 17, welche in Fig. 4 beispielhaft überlagert sind, mittels einer jeweiligen Linse der Optik 15 auf den Detektionsbereich 13 des PIR-Sensors abgebildet. Dabei treffen die jeweils mit Aᵢ - Dᵢ bezeichneten Erfassungszonen 17 einer jeweiligen Gruppe von Erfassungszonen 17 auf das jeweils zugehörige der mehreren mit A - D bezeichneten und zueinander benachbart angeordneten Sensorelemente 12 des PIR-Sensors 11.

Ferner ist in Fig. 5 angedeutet, dass die Optik 15 der Bewegungssensorvorrichtung 10 dazu eingerichtet ist, sämtliche der Erfassungszonen 17 des Erfassungsbereichs 16 des PIR-Sensors 11 vollständig in den Detektionsbereich 13 des PIR-Sensors 11 abzubilden.

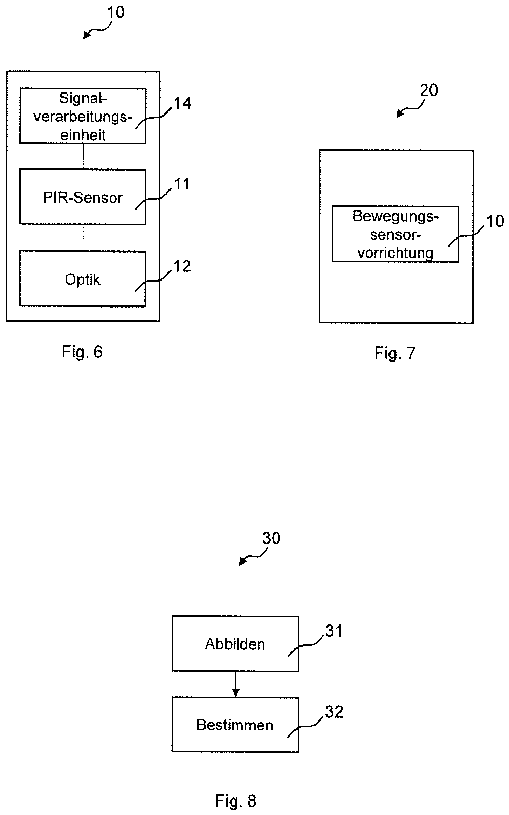

Fig. 6 zeigt schematisch ein Blockschaltbild einer Bewegungssensorvorrichtung 10 gemäß Ausführungsbeispielen.

Die Bewegungssensorvorrichtung 10 umfasst einen PIR-Sensor 11 mit mehreren zueinander benachbart angeordneten Sensorelementen 12, deren sensoraktive Oberflächen einen Detektionsbereich 13 des PIR-Sensors 11 bilden, und eine Optik 15, welche dazu eingerichtet ist, einen Erfassungszonen 17 umfassenden Erfassungsbereich 16 der Bewegungssensorvorrichtung 10 auf den Detektionsbereich 13 des PIR-Sensors 11 abzubilden. Dabei weisen die Erfassungszonen 17 in dem Erfassungsbereich 16 der Bewegungssensorvorrichtung 10 eine räumlich periodische Anordnung mit richtungsabhängiger Periodizität auf.

Fig. 6 zeigt außerdem, dass die Bewegungssensorvorrichtung 10 ferner eine Signalverarbeitungseinheit 14 umfasst, welche dazu eingerichtet ist, die richtungsabhängige Periodizität der Erfassungszonen 17 in dem Erfassungsbereich 16 der Bewegungssensorvorrichtung 10 zu bestimmen.

Insbesondere ist die Signalverarbeitungseinheit 14 dazu eingerichtet, zwischen Paaren zueinander benachbart angeordneter Sensorelemente 12 des PIR-Sensors 11 Differenzsignale von Ausgangssignalen der Sensorelemente 12 zu bilden, und/oder Frequenzkomponenten in den Differenzsignalen oder Ausgangssignalen zu bestimmen. Beispielsweise kann dies mittels Frequenzanalyse (Spektralanalyse) erfolgen.

Fig. 7 zeigt schematisch ein Blockschaltbild eines Beleuchtungssystems 20 gemäß einem Ausführungsbeispiel.

Das Beleuchtungssystem 20 umfasst eine Bewegungssensorvorrichtung 10 gemäß Ausführungsbeispielen, weshalb ihm dessen Effekte und Vorteile zugute kommen.

Dies ermöglicht insbesondere Beleuchtungsanwendungen, welche auf einer Erkennung von Bewegungen, Bewegungsrichtungen und/oder Aufenthaltsorten von Objekten beruhen, welche sich in dem Erfassungsbereich der Bewegungssensorvorrichtung 10 bewegen.

Fig. 8 zeigt Verfahrensschritte 31, 32 eines Verfahrens 30 zum Betreiben einer Bewegungssensorvorrichtung 10 gemäß der Erfindung.

Die Bewegungssensorvorrichtung 10 umfasst dabei einen PIR-Sensor 11 mit mehreren zueinander benachbart angeordneten Sensorelementen 12, deren sensoraktive Oberflächen einen Detektionsbereich 13 des PIR-Sensors 11 bilden.

Im ersten Schritt 31 wird ein Erfassungszonen 17 umfassender Erfassungsbereich 16 des PIR-Sensors 11 auf den Detektionsbereich 13 des PIR-Sensors 11 abgebildet. Dabei weisen die Erfassungszonen 17 in dem Erfassungsbereich 16 der Bewegungssensorvorrichtung 10 eine räumlich periodische Anordnung mit richtungsabhängiger Periodizität auf, wie sie in den Fig. 4 ― 5 beispielhaft dargestellt ist.

Im zweiten Schritt 32 wird die richtungsabhängige Periodizität der Erfassungszonen 17 in dem Erfassungsbereich 16 der Bewegungssensorvorrichtung 10 bestimmt. Insbesondere erfolgt dies, wie zuvor im Zusammenhang mit Fig. 6 erläutert, durch Spektralanalyse jener Signale, welche übliche PIR-Sensoren 11 liefern.

Das Verfahren 30 wird mit der Bewegungssensorvorrichtung 10 gemäß der Erfindung durchgeführt.

Zwar wurden Bewegungssensorvorrichtungen, Verfahren zum Betreiben derselben sowie Beleuchtungssysteme mit diesen Bewegungssensorvorrichtungen gemäß Ausführungsbeispielen beschrieben, jedoch können diverse Abwandlungen in weiteren Ausführungsbeispielen verwirklicht werden. Beispielsweise könnten Erfassungszonen 17, welche auf zueinander gegenpolig verschaltete Sensorelemente 12 des PIR-Sensors 11 abzubilden sind, so in dem Erfassungsbereich 16 der Bewegungssensorvorrichtung 10 angeordnet werden, dass sie entlang bevorzugter Bewegungsbahnen möglichst nicht gleichzeitig sondern abwechselnd Strahlung empfangen. Beispielsweise könnte dies durch abwechselnde Anordnung von Erfassungszonen 17, welche auf zueinander gegenpolig verschaltete Sensorelemente 12 des PIR-Sensors 11 abzubilden sind, entlang bevorzugter Bewegungsbahnen erfolgen. Ferner könnte eine Differenzierung innerhalb von Erfassungsbereichen 16 bezüglich einer Granularität von Erfassungszonen 17 erfolgen. So könnten in einem Teil des Erfassungsbereiches 16 vorzugsweise Erfassungszonen 17 mit kleineren räumlichen Dimensionen angeordnet werden, welche eine besonders genaue Erkennung von Bewegung, Bewegungsrichtung und/oder Aufenthaltsort ermöglichen, wohingegen andere Teile des Erfassungsbereichs 16 bevorzugt Erfassungszonen 17 mit größeren räumlichen Dimensionen umfassen, da dort eine Groberkennung gegebenenfalls genügt.

## Patentansprüche

1. Bewegungssensorvorrichtung (10), umfassend:
- einen PIR-Sensor (11) mit mehreren zueinander benachbart angeordneten Sensorelementen (12), deren sensoraktive Oberflächen einen Detektionsbereich (13) des PIR-Sensors (11) bilden; und
- eine Optik (15), welche dazu eingerichtet ist, einen Erfassungszonen (17) umfassenden Erfassungsbereich (16) des PIR-Sensors (11) auf den Detektionsbereich (13) des PIR-Sensors (11) abzubilden;
- wobei die Erfassungszonen (17) in dem Erfassungsbereich (16) des PIR-Sensors (11) eine räumlich periodische Anordnung mit richtungsabhängiger Periodizität gemäß zueinander orthogonalen ersten und zweiten Richtungen (18, 19) in dem Erfassungsbereich (16) der Bewegungssensorvorrichtung (10) aufweisen,
**dadurch gekennzeichnet,**
- **dass** die Optik (15) dazu eingerichtet ist, mehrere unterschiedliche Gruppen der Erfassungszonen (17) durch eine jeweilige Abbildung in den Detektionsbereich (13) des PIR-Sensors (11) überlagert abzubilden, wobei eine erste richtungsabhängige Periodizität der Erfassungszonen (17) einer ersten Gruppe der mehreren Gruppen und eine zweite richtungsabhängige Periodizität der Erfassungszonen (17) einer zweiten Gruppe der mehreren Gruppen verschieden sind, wobei mehrere Erfassungszonen (17) der ersten Gruppe und mehrere Erfassungszonen (17) der zweiten Gruppe überlagert auf einem der Sensorelemente (12) abgebildet werden.

2. Bewegungssensorvorrichtung (10) gemäß Anspruch 1, ferner umfassend:
- eine Signalverarbeitungseinheit (14), welche dazu eingerichtet ist, die richtungsabhängige Periodizität der Erfassungszonen (17) in dem Erfassungsbereich (16) des PIR-Sensors (11) zu bestimmen.

3. Bewegungssensorvorrichtung (10) gemäß Anspruch 2, wobei
- die Signalverarbeitungseinheit (14) ferner dazu eingerichtet ist,
- zwischen Paaren zueinander benachbart angeordneter Sensorelemente (12) des PIR-Sensors (11) Differenzsignale von Ausgangssignalen der Sensorelemente (12) zu bilden; und/oder
- Frequenzkomponenten in den Differenzsignalen oder den Ausgangssignalen zu bestimmen.

4. Bewegungssensorvorrichtung (10) gemäß einem der vorhergehenden Ansprüche , wobei
- eine Zahl der Erfassungszonen (17) einer jeweiligen der Gruppen der Erfassungszonen (17) einer Zahl der Sensorelemente (12) des PIR-Sensors (11) entspricht.

5. Bewegungssensorvorrichtung (10) gemäß Anspruch 4, wobei
- eine Anordnung der Erfassungszonen (17) der jeweiligen Gruppe der Erfassungszonen (17) der zueinander benachbarten Anordnung der Sensorelemente (12) des PIR-Sensors (11) entspricht.

6. Bewegungssensorvorrichtung (10) gemäß einem der vorhergehenden Ansprüche, wobei
- die Optik (15) dazu eingerichtet ist, die jeweilige Gruppe der Erfassungszonen (17) zur Abbildung in den Detektionsbereich (13) des PIR-Sensors (11) in einer ersten Dimension zu skalieren, welche sich in dem Erfassungsbereich (16) des PIR-Sensors (11) in der ersten Richtung (18) erstreckt.

7. Bewegungssensorvorrichtung (10) gemäß Anspruch 6, wobei
- die Optik (15) dazu eingerichtet ist, die jeweilige Gruppe der Erfassungszonen (17) zur Abbildung in den Detektionsbereich (13) des PIR-Sensors (11) in einer zu der ersten Dimension orthogonalen zweiten Dimension zu skalieren, welche sich in dem Erfassungsbereich (16) des PIR-Sensors (11) in der zweiten Richtung (19) erstreckt.

8. Bewegungssensorvorrichtung (10) gemäß einem der vorhergehenden Ansprüche, wobei
- die Optik (15) dazu eingerichtet ist, sämtliche der Erfassungszonen (17) des Erfassungsbereichs (16) des PIR-Sensors (11) vollständig in den Detektionsbereich (13) des PIR-Sensors (11) abzubilden.

9. Bewegungssensorvorrichtung (10) gemäß einem der vorhergehenden Ansprüche, wobei
- der PIR-Sensor (11) zwei oder vier der zueinander benachbart angeordneten Sensorelemente (12) umfasst.

10. Beleuchtungssystem (20), umfassend:
- eine Bewegungssensorvorrichtung (10) gemäß einem der Ansprüche 1 - 9.

11. Verfahren (30) zum Betreiben einer Bewegungssensorvorrichtung (10), wobei
- die Bewegungssensorvorrichtung (10) einen PIR-Sensor (11) mit mehreren zueinander benachbart angeordneten Sensorelementen (12) umfasst, deren sensoraktive Oberflächen einen Detektionsbereich (13) des PIR-Sensors (11) bilden, wobei das Verfahren (30) umfasst:
- Abbilden (31) eines Erfassungszonen (17) umfassenden Erfassungsbereiches (16) des PIR-Sensors (11) auf den Detektionsbereich (13) des PIR-Sensors (11) mittels einer Optik (15);
- wobei die Erfassungszonen (17) in dem Erfassungsbereich (16) des PIR-Sensors (11) eine räumlich periodische Anordnung mit richtungsabhängiger Periodizität gemäß zueinander orthogonalen ersten und zweiten Richtungen (18, 19) in dem Erfassungsbereich (16) der Bewegungssensorvorrichtung (10) aufweisen;
- wobei die Optik eingerichtet ist, mehrere unterschiedliche Gruppen der Erfassungszonen (17) durch eine jeweilige Abbildung in den Detektionsbereich (13) des PIR-Sensors (11) überlagert abzubilden, wobei eine erste richtungsabhängige Periodizität der Erfassungszonen (17) einer ersten Gruppe der mehreren Gruppen und eine zweite richtungsabhängige Periodizität der Erfassungszonen (17) einer zweiten Gruppe der mehreren Gruppen verschieden sind, wobei mehrere Erfassungszonen (17) der ersten Gruppe und mehrere Erfassungszonen (17) der zweiten Gruppe überlagert auf einem der Sensorelemente (12) abgebildet werden; und
- Bestimmen (32) der richtungsabhängigen Periodizität der Erfassungszonen (17) in dem Erfassungsbereich (16) des PIR-Sensors (11).

12. Verfahren (30) gemäß Anspruch 11, wobei
- das Verfahren (30) mit der Bewegungssensorvorrichtung (10) gemäß einem der Ansprüche 1 - 9 durchgeführt wird.

## Claims

1. Motion sensor device (10), comprising:
- a PIR sensor (11) having a plurality of sensor elements (12) arranged adjacent to one another, whose sensor-active surfaces form a detection region (13) of the PIR sensor (11); and
- an optical system (15) which is configured to image a detection region (16) of the PIR sensor (11), which detection region (16) comprises detection zones (17), onto the detection region (13) of the PIR sensor (11);
- wherein the detection zones (17) in the detection region (16) of the PIR sensor (11) have a spatially periodic arrangement with direction-dependent periodicity according to first and second directions (18, 19) that are orthogonal to one another in the detection region (16) of the motion sensor device (10),
**characterized in that,**
- the optical system (15) is configured to image a plurality of different groups of the detection zones (17) in a superimposed manner via a respective imaging into the detection region (13) of the PIR sensor (11), wherein a first direction-dependent periodicity of the detection zones (17) of a first group of the plurality of groups and a second direction-dependent periodicity of the detection zones (17) of a second group of the plurality of groups are different, wherein a plurality of detection zones (17) of the first group and a plurality of detection zones (17) of the second group are imaged in a superimposed manner onto one of the sensor elements (12).

2. Motion sensor device (10) according to claim 1, further comprising:
- a signal processing unit (14) which is configured to determine the direction-dependent periodicity of the detection zones (17) in the detection region (16) of the PIR sensor (11).

3. Motion sensor device (10) according to claim 2, wherein
- the signal processing unit (14) is further configured to
- form differential signals of output signals of the sensor elements (12) between pairs of sensor elements (12) of the PIR sensor (11) which are arranged adjacent to one another; and/or
- determine frequency components in the differential signals or the output signals.

4. Motion sensor device (10) according to any of the preceding claims, wherein
- a number of the detection zones (17) of a respective one of the groups of detection zones (17) corresponds to a number of the sensor elements (12) of the PIR sensor (11).

5. Motion sensor device (10) according to claim 4, wherein
- an arrangement of the detection zones (17) of the respective group of detection zones (17) corresponds to the arrangement of the sensor elements (12) of the PIR sensor (11) which are arranged adjacent to one another.

6. Motion sensor device (10) according to any of the preceding claims, wherein
- for imaging into the detection region (13) of the PIR sensor (11), the optical system (15) is configured to scale the respective group of the detection zones (17) in a first dimension which extends in the first direction (18) in the detection region (16) of the PIR sensor (11).

7. Motion sensor device (10) according to claim 6, wherein
- for imaging into the detection region (13) of the PIR sensor (11), the optical system (15) is configured to scale the respective group of the detection zones (17) in a second dimension orthogonal to the first dimension, said second dimension extending in the second direction (19) in the detection region (16) of the PIR sensor (11).

8. Motion sensor device (10) according to any of the preceding claims, wherein
- the optical system (15) is configured to image all of the detection zones (17) of the detection region (16) of the PIR sensor (11) completely into the detection region (13) of the PIR sensor (11).

9. Motion sensor device (10) according to any of the preceding claims, wherein
- the PIR sensor (11) comprises two or four of the sensor elements (12) arranged adjacent to one another.

10. Lighting system (20) comprising:
- a motion sensor device (10) according to any of claims 1 - 9.

11. Method (30) for operating a motion sensor device (10), wherein
- the motion sensor device (10) comprises a PIR sensor (11) having a plurality of sensor elements (12) arranged adjacent to one another whose sensor-active surfaces form a detection region (13) of the PIR sensor (11), wherein the method (30) comprises:
- imaging (31) of a detection region (16) of the PIR sensor (11), which detection region (16) comprises detection zones (17), onto the detection region (13) of the PIR sensor (11) by means of an optical system (15);
- wherein the detection zones (17) in the detection region (16) of the PIR sensor (11) have a spatially periodic arrangement with direction-dependent periodicity according to first and second directions (18, 19) that are orthogonal to one another in the detection region (16) of the motion sensor device (10);
- wherein the optical system is configured to image a plurality of different groups of the detection zones (17) in a superimposed manner via a respective imaging into the detection region (13) of the PIR sensor (11), wherein a first direction-dependent periodicity of the detection zones (17) of a first group of the plurality of groups and a second direction-dependent periodicity of the detection zones (17) of a second group of the plurality of groups are different, wherein a plurality of detection zones (17) of the first group and a plurality of detection zones (17) of the second group are imaged on one of the sensor elements (12) in a superimposed manner; and
- determining (32) the direction-dependent periodicity of the detection zones (17) in the detection region (16) of the PIR sensor (11).

12. Method (30) according to claim 11, wherein
- the method (30) is performed with the motion sensor device (10) according to any of claims 1 - 9.

## Revendications

1. Dispositif de détection de mouvement (10), comprenant :
- un capteur PIR (11) pourvu de plusieurs éléments de détection (12) disposés de manière adjacente les uns aux autres, dont les surfaces de détection actives forment une zone de détection (13) du capteur PIR (11) ; et
- une optique (15), qui est conçue pour reproduire une zone de saisie (16) du capteur PIR (11) comprenant des régions de saisie (17) sur la zone de détection (13) du capteur PIR (11) ;
- dans lequel les régions de saisie (17) dans la zone de saisie (16) du capteur PIR (11) présentent un agencement périodique dans l'espace avec une périodicité dépendant de la direction selon des première et deuxième directions (18, 19) orthogonales l'une à l'autre dans la zone de saisie (16) du dispositif de détection de mouvement (10), **caractérisé**
- **en ce que** l'optique (15) est conçue pour reproduire de manière superposée plusieurs groupes différents des régions de saisie (17) par une reproduction respective dans la zone de détection (13) du capteur PIR (11), dans lequel une première périodicité dépendant de la direction des régions de saisie (17) d'un premier groupe parmi les plusieurs groupes et une deuxième périodicité dépendant de la direction des régions de saisie (17) d'un deuxième groupe parmi les plusieurs groupes sont différentes, dans lequel plusieurs régions de saisie (17) du premier groupe et plusieurs régions de saisie (17) du deuxième groupe sont reproduites de manière superposée sur l'un des éléments de détection (12).

2. Dispositif de détection de mouvement (10) selon la revendication 1, comprenant en outre :
- une unité de traitement de signal (14), qui est conçue pour déterminer la périodicité dépendant de la direction des régions de saisie (17) dans la zone de saisie (16) du capteur PIR (11).

3. Dispositif de détection de mouvement (10) selon la revendication 2, dans lequel
- l'unité de traitement de signal (14) est en outre conçue pour
- former des signaux de différence à partir de signaux de sortie des éléments de détection (12) entre des paires d'éléments de détection (12) du capteur PIR (11) disposés de manière adjacente des uns aux autres ; et/ou
- déterminer des composantes de fréquence dans les signaux de différence ou les signaux de sortie.

4. Dispositif de détection de mouvement (10) selon l'une quelconque des revendications précédentes, dans lequel
- un nombre des régions de saisie (17) de l'un respectif des groupes de régions de saisie (17) correspond à un nombre des éléments de détection (12) du capteur PIR (11).

5. Dispositif de détection de mouvement (10) selon la revendication 4, dans lequel
- un agencement des régions de saisie (17) du groupe respectif des régions de saisie (17) correspond à l'agencement adjacent les uns aux autres des éléments de détection (12) du capteur PIR (11).

6. Dispositif de détection de mouvement (10) selon l'une quelconque des revendications précédentes, dans lequel
- l'optique (15) est conçue pour redimensionner le groupe respectif des régions de saisie (17) pour la reproduction dans la zone de détection (13) du capteur PIR (11) dans une première dimension, qui s'étend dans la zone de saisie (16) du capteur PIR (11) dans la première direction (18).

7. Dispositif de détection de mouvement (10) selon la revendication 6, dans lequel
- l'optique (15) est conçue pour redimensionner le groupe respectif des régions de saisie (17) pour la reproduction dans la zone de détection (13) du capteur PIR (11) dans une deuxième dimension, orthogonale à la première dimension, qui s'étend dans la zone de saisie (16) du capteur PIR (11) dans la deuxième direction (19).

8. Dispositif de détection de mouvement (10) selon l'une quelconque des revendications précédentes, dans lequel
- l'optique (15) est conçue pour reproduire entièrement l'ensemble des régions de saisie (17) de la zone de saisie (16) du capteur PIR (11) dans la zone de détection (13) du capteur PIR (11).

9. Dispositif de détection de mouvement (10) selon l'une quelconque des revendications précédentes, dans lequel
- le capteur PIR (11) comprend deux ou quatre des éléments de détection (12) disposés de manière adjacente les uns aux autres.

10. Système d'éclairage (20), comprenant :
- un dispositif de détection de mouvement (10) selon l'une quelconque des revendications 1 à 9.

11. Procédé (30) pour faire fonctionner un dispositif de détection de mouvement (10), dans lequel
- le dispositif de détection de mouvement (10) comprend un capteur PIR (11) comprenant plusieurs éléments de détection (12) disposés de manière adjacente les uns aux autres, dont les surfaces de détection actives forment une zone de détection (13) du capteur PIR (11), dans lequel le procédé (30) comprend :
- la reproduction (31) d'une zone de saisie (16) du capteur PIR (11) comprenant des régions de saisie (17) sur la zone de détection (13) du capteur PIR (11) au moyen d'une optique (15) ;
- dans lequel les régions de saisie (17) dans la zone de saisie (16) du capteur PIR (11) présentent un agencement périodique dans l'espace avec une périodicité dépendant de la direction selon des première et deuxième directions (18, 19) orthogonales l'une à l'autre dans la zone de saisie (16) du dispositif de détection de mouvement (10) ;
- dans lequel l'optique est conçue pour reproduire de manière superposée plusieurs groupes différents des régions de saisie (17) par une reproduction respective dans la zone de détection (13) du capteur PIR (11), dans lequel une première périodicité dépendant de la direction des régions de saisie (17) d'un premier groupe parmi les plusieurs groupes et une deuxième périodicité dépendant de la direction des régions de détection (17) d'un deuxième groupe parmi les plusieurs groupes sont différentes, dans lequel plusieurs régions de saisie (17) du premier groupe et plusieurs régions de saisie (17) du deuxième groupe sont reproduites de manière superposée sur l'un des éléments de détection (12) ; et
- la détermination (32) de la périodicité dépendant de la direction des régions de saisie (17) dans la zone de saisie (16) du capteur PIR (11).

12. Procédé (30) selon la revendication 11, dans lequel
- le procédé (30) est réalisé avec le dispositif de détection de mouvement (10) selon l'une quelconque des revendications 1 à 9.
